# EUROPÄISCHE PATENTSCHRIFT

(11) **EP 2 924 551 B1**
(45) Veröffentlichungstag und Bekanntmachung des Hinweises auf die Patenterteilung: **05.12.2018**
(21) Anmeldenummer: 14162062.5
(22) Anmeldetag: 27.03.2014
(51) Int. Cl.: G06F 3/0488

(54) **Verfahren und Vorrichtung zum Bereitstellen einer graphischen Benutzerschnittstelle in einem Fahrzeug**
Method and device for providing a graphical user interface in a vehicle
Procédé et dispositif de préparation d'une interface utilisateur graphique dans un véhicule

(43) Veröffentlichungstag der Anmeldung: 30.09.2015
(73) Patentinhaber: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE)

(56) Entgegenhaltungen:
- EP-A2- 2 624 120
- WO-A1-2008/086306
- DE-A1-102007 039 444
- US-A1- 2012 166 954
- US-A1- 2013 100 059
- US-A1- 2014 013 271

## Beschreibung

Die vorliegende Erfindung betrifft ein Verfahren und eine Vorrichtung zum Bereitstellen einer graphischen Benutzerschnittstelle in einem Fahrzeug, wobei das Fahrzeug zumindest zwei Fahrzeugfunktionen umfasst.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Die DE 10 2008 050 803 A1 beschreibt ein Verfahren zum Anzeigen von Informationen in einem Fahrzeug, bei dem eine Teilmenge einer Gesamtinformation über einen Bildlauf gesteuert werden kann.

Die EP 2 246 214 A1 beschreibt ein Verfahren zum Anzeigen von in Listen geordneter Informationen. Dabei können ausgewählte Listeneinträge im Vordergrund angezeigt werden, während nicht ausgewählte Listeneinträge im Hintergrund angezeigt werden.

Die US 8,344,870 B2 beschreibt ein virtuelles Armaturenbrett mit einem oder mehreren TouchScreens. Dabei werden auf den Anzeigeflächen Icons für verschiedene Fahrzeugfunktionen angezeigt.

Nachteilig an den Verfahren des Standes der Technik ist es jedoch, dass Icons oder graphische Objekte für eine Bedienung einer Fahrzeugfunktion erst ausgewählt werden müssen und dann darauf gewartet werden muss, dass ein Vollbildmodus mit einer Anzeige der Informationen angezeigt wird.

In der US 2012/166954 A1 wird ein System beschrieben, bei dem eine elektronische Montage verschiedener Objekte erstellt und angezeigt wird. Beispielsweise wird eine Anzeige mit mehreren Kachelobjekten erstellt, die jeweils beispielsweise Fotos, Videos oder Webseiten zugeordnet sind. Durch eine Bedienhandlung auf der Oberfläche eines Touchscreens im Bereich der Kachelobjekte kann die Anzeige im Bereich der Kachel verändert werden, indem etwa nach einer horizontalen Wischgeste ein neues Bild angezeigt wird, wobei die anderen Kachelobjekte unverändert bleiben. Ferner kann durch Antippen eines Kachelobjekts das dazugehörige Dokument geöffnet und im Vollbildmodus dargestellt werden.

In der DE 10 2007 039 444 A1 wird ein Verfahren zum Anzeigen von Informationen in einem Kraftfahrzeug beschrieben, bei dem ein flächiges grafisches Objekt zwei Seiten aufweist, auf denen ein Anzeigefeld beziehungsweise ein Bedienfeld dargestellt ist. Es kann eine Drehung perspektivisch dargestellt werden, wobei die Dynamik der Drehung durch eine vorgegebene Kurve in Abhängigkeit von der Zeit festgelegt ist.

Es ist daher Aufgabe der vorliegenden Erfindung, ein Verfahren und eine Vorrichtung bereitzustellen, mit denen auf intuitive und schnelle Art und Weise Informationen einer Fahrzeugfunktion angezeigt werden können. Weiterhin soll auf schnelle und intuitive Art und Weise eine Bedienung der Fahrzeugfunktionen ermöglicht werden.

Diese Aufgabe wird durch ein Verfahren nach Anspruch 1 und eine Vorrichtung nach Anspruch 5 gelöst. Vorteilhafte Ausgestaltungen und Weiterbildungen sind Gegenstände der abhängigen Ansprüche.

Bei dem erfindungsgemäßen Verfahren werden zumindest ein erstes und ein zweites Widget-Objekt auf einer Anzeigefläche mit einem ersten Anzeigeinhalt angezeigt, wobei das erste und das zweite Widget-Objekt jeweils einer Fahrzeugfunktion zugeordnet sind. Weiterhin sind zumindest dem ersten Widget-Objekt mehrere Bedienaktionen zugeordnet. Es wird eine Bedienaktion für das erste Widget-Objekt erfasst. Weiterhin wird ermittelt, um welche der mehreren Bedienaktionen es sich bei der erfassten Bedienaktion handelt. Der erste Anzeigeinhalt des ersten Widget-Objekts wird in Abhängigkeit von der erfassten Bedienaktion auf einen zweiten Anzeigeinhalt verändert. Durch das erfindungsgemäße Verfahren kann der Nutzer in einem Widget-Objekt vorteilhafterweise über unterschiedliche Bedienaktionen unterschiedliche Anzeigeinhalte zur Anzeige bringen. Durch die unterschiedlichen Bedienaktionen kann auf einfache Art und Weise entschieden werden, was angezeigt werden soll, ohne eine umständliche Navigation durch ein Menü vornehmen zu müssen. Weiterhin kann dadurch auch nur auf einem Teilbereich der Anzeigefläche die Anzeige verändert werden, während der grundlegende Anzeigeinhalt der gesamten Anzeigefläche gleich bleibt.

Unter einem *Widget-Objekt* wird im Sinne der Erfindung ein Objekt verstanden, welches graphisch auf der Anzeigefläche dargestellt wird und welches einer Anwendung zugeordnet ist, die z. B. von einer Fahrzeugeinrichtung ausgeführt wird. Ein Widget-Objekt kann insbesondere in einem kleinen Bereich der Anzeigefläche Informationen einer Fahrzeugeinrichtung anzeigen, die laufend aktualisiert werden. Beispielsweise können von dem Widget-Objekt Routeninformationen des Navigationssystems, aktuelle Meldungen zum Wetter, zum Straßenzustand und zum Verkehrszustand angezeigt werden sowie Informationen zu Multimedia-Einrichtungen des Fahrzeugs. Die Widget-Objekte werden insbesondere unabhängig vom weiteren Anzeigeinhalt der Anzeigefläche dargestellt. Ist das Anzeigefenster ein Widget-Objekt, können auch die graphischen Objekte in dem Anzeigefenster Widget-Objekte sein. Dabei hat der Nutzer über das Anzeigefenster Zugang zu anderen Widget-Objekten.

Insbesondere umfasst der zweite Anzeigeinhalt zumindest eine bedienbare Schaltfläche, mittels welcher die dem ersten Widget-Objekt zugeordnete Fahrzeugfunktion bedient wird. Das Widget-Objekt kann also bedient werden, ohne dass vorher eine komplette Veränderung der Anzeige auf der Anzeigefläche vorgenommen werden muss. Auch hierdurch bleiben dem Nutzer überflüssige Bedienschritte erspart.

In einer Ausgestaltung des erfindungsgemäßen Verfahrens wird erfasst, ob das Fahrzeug gestartet wird. Wenn erfasst worden ist, dass das Fahrzeug gestartet wurde, werden das erste und das zweite Widget-Objekt mit dem ersten Anzeigeinhalt automatisch auf der Anzeigefläche angezeigt. Bei der Anzeige der Widget-Objekte mit dem ersten Anzeigeinhalt auf der Anzeigefläche handelt es sich demnach um eine Startbildanzeige, die auch als Home-Screen bezeichnet wird. Der Home-Screen ist nach Belieben von dem Nutzer des Fahrzeugs konfigurierbar. Dabei kann der Nutzer sowohl die Anordnung der Widget-Objekte, die Fahrzeugfunktionen, welche von den Widget-Objekten angezeigt werden sollen, wie auch die Anzahl der angezeigten Widget-Objekte selbst bestimmen.

Erfindungsgemäß umfassen die mehreren dem ersten Widget-Objekt zugeordneten Bedienaktionen eine Berührung des ersten Widget-Objekts an einem Berührungspunkt, eine Berührung des ersten Widget-Objekts an zumindest zwei Berührungspunkten und/oder eine Wischgeste mit anfänglich einem oder zwei Berührungspunkten innerhalb der Fläche des ersten Widget-Objekts. Dabei bedeutet anfänglich, dass die Wischgeste mit einer Berührung des Widget-Objekts an einem bzw. an zwei Berührungspunkten begonnen wird. Wird im Laufe der Wischgeste ein Berührungspunkt nicht mehr berührt, hat dies keine Auswirkungen auf die Veränderung des Anzeigeinhalts. Dadurch kann verhindert werden, dass die Anzeige auf der Anzeigefläche unbeabsichtigt verändert wird. Die Bedienaktionen sind insbesondere Bedienaktionen, mit deren Bewegungsabläufen der Nutzer bereits beispielsweise von seinem Smartphone oder seinem Tablet-Computer vertraut ist.

Wenn die erfasste Bedienaktion als die Berührung des ersten Widget-Objekts an einem Berührungspunkt ermittelt wird, kann gemäß dieser Offenbarung das Widget-Objekt nach der Berührung vergrößert dargestellt werden, wobei das zweite Widget-Objekt zumindest teilweise überdeckt wird. Dadurch können dann Anzeigeinhalte in dem Widget-Objekt ebenso vergrößert dargestellt werden. Dies ermöglicht insbesondere eine komfortable Bedienung der Fahrzeugfunktion über das erste Widget-Objekt. Schaltflächen können dann in einer Größe dargestellt werden, die insbesondere der Fahrer auch während der Fahrt treffen kann, ohne seine Aufmerksamkeit zu lange vom Verkehrsgeschehen abwenden zu müssen.

In einer anderen Ausgestaltung dieser Offenbarung umfasst der erste Anzeigeinhalt einen Listeneintrag einer Liste, welche mehrere Listeneinträge umfasst. Wenn die Bedienaktion als die Wischgeste mit anfänglich einem Berührungspunkt ermittelt wird, wird zunächst die Richtung der Wischgeste ermittelt. Es wird dann in dem ersten Widget-Objekt ein Bildlauf erzeugt, mit dem als zweiter Anzeigeinhalt weitere Listeneinträge der mehreren Listeneinträge zur Anzeige gebracht werden. Es kann also durch die Liste gescrollt werden, ohne dass eine grundlegende Veränderung der Anzeige auf der Anzeigefläche erzeugt werden muss. Es kann beispielsweise immer noch ein Navigationssystem angezeigt werden, während durch die Liste gescrollt wird. Die Liste ist dabei insbesondere eine Liste von Musiktiteln, die in einem Multimediasystem des Fahrzeugs oder in einem externen Multimediasystem abgespeichert sind.

Wenn die Bedienaktion die Wischgeste mit anfänglich zwei Berührungspunkten ist, wird erfindungsgemäß ebenso die Richtung der Wischgeste ermittelt. Das erste Widget-Objekt wird erfindungsgemäß durch die Wischgeste um eine Achse geschwenkt, wobei die Schwenkrichtung des ersten Widget-Objekts abhängig von der Richtung der Wischgeste ist. Wird die Wischgeste nach rechts ausgeführt und rechts auch als Richtung ermittelt, wird das erste Widget-Objekt nach rechts geschwenkt. Für eine nach links, oben oder unten ausgeführte Wischgeste wird das Widget-Objekt entsprechend nach links, oben oder unten geschwenkt. Dabei kann jeder Schwenkrichtung ein anderer zweiter Anzeigeinhalt, der in dem ersten Widget-Objekt angezeigt wird, zugeordnet sein.

Erfindungsgemäß weist das erste Widget-Objekt eine virtuelle Rückseite auf. Das erste Widget-Objekt wird dann solange um die Achse geschwenkt, bis das erste Widget-Objekt umgedreht angezeigt wird, so dass die virtuelle Rückseite angezeigt wird, wobei auf der virtuellen Rückseite Einstellungsmöglichkeiten für das erste Widget-Objekt angezeigt werden. Dies hat den Vorteil, dass der Zugriff auf die Einstellungsmöglichkeiten für das Widget-Objekt, auf welche üblicherweise nur über eine Schaltfläche Zugriff erlangt werden kann, einfach und schnell erfolgen kann, ohne dass der Nutzer eine kleine Schaltfläche finden und während der Fahrt treffen muss. Insbesondere der Fahrer muss dann zur Einstellung des Widget-Objekts sein Aufmerksamkeit nur kurz vom Verkehrsgeschehen abwenden.

Erfindungsgemäß wird , wenn das Widget-Objekt umgedreht wurde, die virtuelle Rückseite in einem Vollbildmodus angezeigt. Dies ist insbesondere dann vorteilhaft, wenn das Widget-Objekt auf der Anzeigefläche nur eine kleine Fläche einnimmt. Dadurch können dann die Einstellungsmöglichkeiten in einer angenehmen und für den Nutzer sinnvollen Größe auf der Anzeigefläche angezeigt werden.

Insbesondere kann das Widget-Objekt während des Schwenkens perspektivisch oder dreidimensional dargestellt werden. Der Schwenkvorgang wird dabei insbesondere über eine Animation dargestellt.

Ferner betrifft die Erfindung eine Vorrichtung zum Bereitstellen einer graphischen Benutzerschnittstelle in einem Fahrzeug, wobei das Fahrzeug zumindest zwei Fahrzeugfunktionen umfasst. Die erfindungsgemäße Vorrichtung umfasst eine Anzeigefläche, auf welcher zumindest ein erstes und eine zweites Widget-Objekt mit jeweils einem ersten Anzeigeinhalt anzeigbar sind, wobei das erste und das zweite Widget-Objekt jeweils einer Fahrzeugfunktion zugeordnet sind und zumindest dem ersten Widget-Objekt mehrere Bedienaktionen zugeordnet sind. Weiterhin umfasst die Vorrichtung eine Erfassungseinheit, mittels derer eine Bedienaktion für das erste Widget-Objekt erfassbar ist. Weiterhin ist mit der Erfassungseinheit ermittelbar, um welche der mehreren Bedienaktionen es sich bei der erfassten Bedienaktion handelt. Ferner umfasst die Vorrichtung eine Steuereinheit, mittels welcher die Anzeigefläche derart ansteuerbar ist, dass der erste Anzeigeinhalt in dem ersten Widget-Objekt in Abhängigkeit von der erfassten Bedienaktion auf einen zweiten Anzeigeinhalt veränderbar ist, wobei die mehreren dem ersten Widget-Objekt zugeordneten Bedienaktionen eine Berührung des ersten Widget-Objekts an einem Berührungspunkt, eine Berührung des ersten Widget-Objekts an zumindest zwei Berührungspunkten und/oder eine Wischgeste mit anfänglich einem oder zwei Berührungspunkten innerhalb der Fläche des ersten Widget-Objekts umfassen. Wenn bei der Vorrichtung die Bedienaktion als die Wischgeste mit anfänglich zwei Berührungspunkten ermittelt wird, ist die Richtung der Wischgeste ermittelbar. Das erste Widget-Objekt ist durch die Bedienaktion um eine Achse geschwenkt anzeigbar, wobei die Schwenkrichtung des ersten Widget-Objekts abhängig von der Richtung der Wischgeste ist. Das erste Widget-Objekt weist eine virtuelle Rückseite auf und das erste Widget-Objekt ist solange um die Achse schwenkbar, bis das Widget-Objekt umgedreht angezeigt wird, so dass die virtuelle Rückseite angezeigt wird, wobei auf der virtuellen Rückseite Einstellungsmöglichkeiten für das erste Widget-Objekt anzeigbar sind. Wenn das Widget-Objekt umgedreht wurde, ist die virtuelle Rückseite in einem Vollbildmodus anzeigbar.

Die erfindungsgemäße Vorrichtung ist insbesondere zum Ausführen des erfindungsgemäßen Verfahrens geeignet und weist daher alle Vorteile des Verfahrens auf.

Die erfindungsgemäße Vorrichtung ist insbesondere so ausgestaltet, dass sie die vorstehend beschriebenen Verfahrensschritte teilweise oder vollständig ausführen kann.

Die Erfassungseinheit umfasst insbesondere eine berührungsempfindliche Oberfläche. Die Anzeigefläche stellt also einen sogenannten Touchscreen bereit, der über Berührungen mit einem Betätigungselement, beispielsweise der Hand oder Fingers eines Nutzers bedient werden kann.

Insbesondere sind mittels der Erfassungseinheit Wischgesten erfassbar, wobei die Richtungen der Wischgesten ermittelbar sind und das erste Widget-Objekt in Abhängigkeit von den ermittelten Richtungen der Wischgesten veränderbar ist.

Die Fahrzeugfunktionen umfassen insbesondere eine Navigationsfunktion, eine Multimediafunktion, eine Kommunikationsfunktion und/oder eine Fahrzeugüberwachungsfunktion.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt ein Fahrzeug mit einer erfindungsgemäßen Vorrichtung aus Figur 1,
- Figuren 3a bis 6c: zeigen Beispiele von Anzeigen, wie sie von dem erfindungsgemäßen Verfahren auf der Anzeigefläche erzeugt werden können.

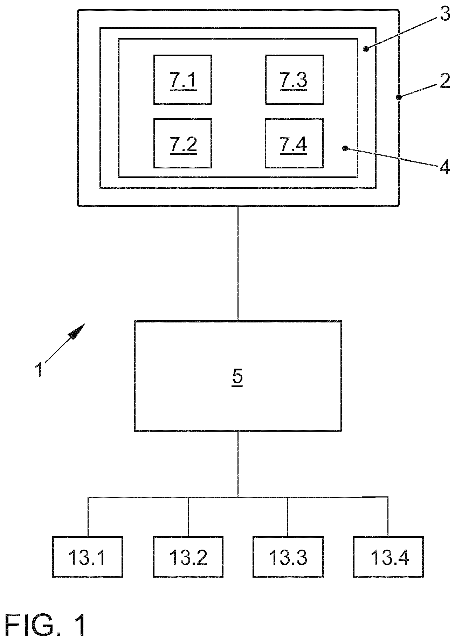

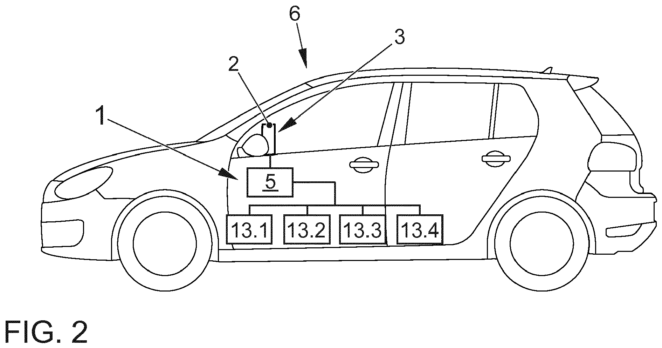

Mit Bezug zu den Figuren 1 und 2 wird ein Ausführungsbeispiel der erfindungsgemäßen Vorrichtung 1 sowie eine Anordnung der erfindungsgemäßen Vorrichtung 1 in einem Fahrzeug 6 erläutert:
Die Vorrichtung 1 dient der Bereitstellung einer Benutzerschnittstelle in einem Fahrzeug 6. Sie umfasst eine Anzeigevorrichtung 2 mit einer Anzeigefläche 3. Die Anzeigefläche 3 kann von einem Display beliebiger Bauart bereitgestellt werden. Die Anzeigevorrichtung 2 ist mit einer Steuereinheit 5 verbunden. Die Steuereinheit 5 erzeugt Graphikdaten die mittels der Anzeigefläche 3 im Innenraum des Fahrzeugs 6 für die Fahrzeuginsassen sichtbar wiedergegeben werden. Es können für die Benutzerschnittstelle insbesondere Widget-Objekte 7.1 bis 7.4, welche als Anzeige- und Bedienobjekte dienen, angezeigt werden. Diese Widget-Objekte 7.1 bis 7.4 unterstützen den Nutzer bei der Steuerung von Einrichtungen des Fahrzeugs 6. Dabei ist jedes der Widget-Objekte 7.1 bis 7.4 einer Fahrzeugfunktion 13.1 bis 13.4 zugeordnet. Die Widget-Objekte 7.1 bis 7.4 sind dabei Objekte, welche graphisch auf der Anzeigefläche 3 dargestellt werden. Das Widget-Objekt 7.1 ist dabei der Fahrzeugfunktion 13.1, dem Navigationssystem, zugeordnet. Es zeigt Routeninformationen des Navigationssystems 13.1 an. Das Widget-Objekt 7.2 ist der Fahrzeugfunktion 13.2, dem Multimediasystem des Fahrzeugs 6, zugeordnet. Es zeigt beispielsweise den momentan abgespielten Musiktitel an. Das Widget-Objekt 7.3 zeigt aktuelle Meldungen zum Wetter an. Diese kann es über die Fahrzeugfunktion 13.3 empfangen. Dabei kann über die Fahrzeugfunktion 13.3 ein Mobiltelefon mit dem Fahrzeug 6 gekoppelt werden, welches die Wettermeldungen bereitstellt. Das Widget-Objekt 7.4 ist der Fahrzeugfunktion 13.4 zugeordnet. Es zeigt den momentanen Zustand des Fahrzeugs 6 sowie eventuelle Störungen oder Wartungserinnerungen an.

Des Weiteren ist eine Erfassungseinheit 4 vorgesehen, die als berührungsempfindliche Oberfläche auf der Anzeigefläche 3 der Anzeigevorrichtung 2 ausgestaltet ist. Dabei können Bedienaktion über Berührungen der Anzeigefläche 3 mit einem Betätigungselement, beispielsweise einer Fingerspitze des Nutzers, erfasst werden.

Jedem Widget-Objekt 7.1 bis 7.4 sind mehrere Bedienaktionen zugeordnet, die für das jeweilige Widget-Objekt 7.1 bis 7.4 ausgeführt werden können. Wird für ein Widget-Objekt 7.1 bis 7.4 eine Bedienaktion erfasst, die diesem nicht zugeordnet ist, wird die Bedienaktion ignoriert.

Mit der Erfassungseinheit 4 kann weiterhin ermittelt werden, welche der mehreren Bedienaktionen ausgeführt wurde. In Verbindung mit der Steuereinheit 5 kann dann die Anzeigefläche 3 derart angesteuert werden, dass der erste Anzeigeinhalt des Widget-Objekts 7.1 bis 7.4, für welches eine Bedienaktion erfasst wurde, verändert wird.

Die Steuereinheit 5 ist weiterhin mit den Fahrzeugfunktionen 13.1 bis 13.4 verbunden. Der in den Widget-Objekten 7.1 bis 7.4 angezeigte Informationsinhalt kann daher laufend aktualisiert werden. Weiterhin können über die Widget-Objekte 7.1 bis 7.4 getätigte Eingaben zu einer Einstellungsveränderung der Fahrzeugfunktionen 13.1 bis 13.4 führen.

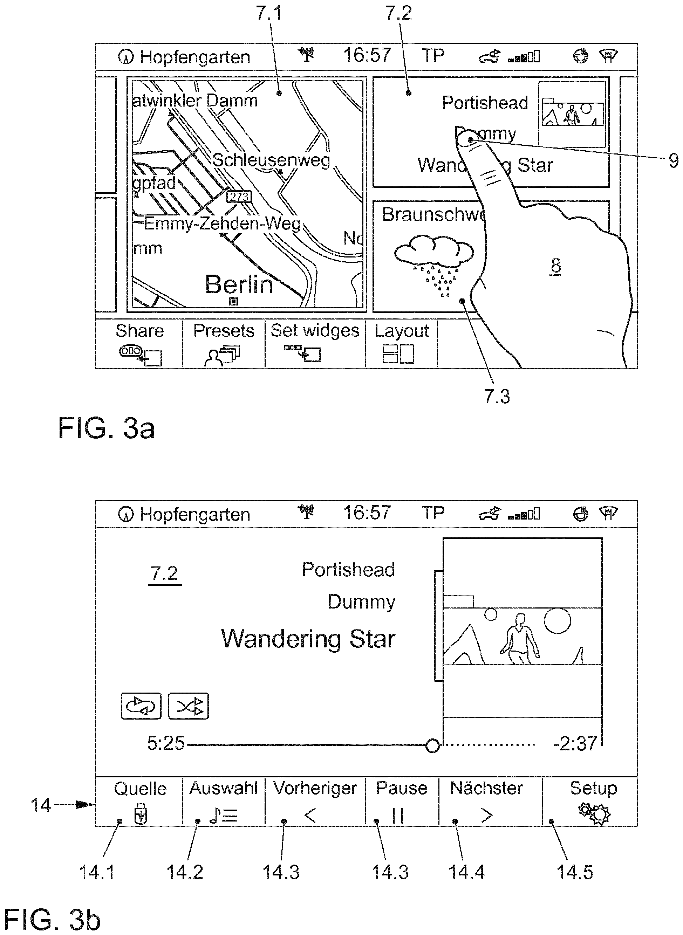

Im Folgenden wird mit Bezug zu den Figuren 3a, 3b, 4a bis 4b und 5a bis 5c ein Ausführungsbeispiel des erfindungsgemäßen Verfahrens erläutert. Dabei wird in allen Figuren das Widget Objekt 7.2, welches der Fahrzeugfunktion 13.2 zugeordnet ist, bedient. Dem Widget-Objekt 7.2 sind dabei insbesondere drei unterschiedliche Bedienaktionen zugeordnet, die bei Ausführung zu einer Veränderung des ersten Anzeigeinhalts des Widget-Objekts 7.2 führen. Die Bedienaktionen umfassen dabei insbesondere eine Berührung der berührungsempfindlichen Oberfläche an einer Stelle, eine Wischgeste, welche mit einer Berührung der berührungsempfindlichen Oberfläche an einem Berührungspunkt 12.1 begonnen wird und eine Wischgeste, welche mit einer Berührung der berührungsempfindlichen Oberfläche an zwei Berührungspunkten 12.1 und 12.2 begonnen wird.

Dabei zeigen die Figuren 3a, 4a und 5a jeweils die Ausgangsanzeige auf der Anzeigefläche 3 der Anzeigevorrichtung 2 an. Darauf sind drei Widget-Objekte 7.1 bis 7.3 dargestellt. Die Anordnung der Widget-Objekte 7.1 bis 7.3 sowie der Inhalt der Widget-Objekte 7.1 bis 7.3 wurden dabei von dem Nutzer selbst konfiguriert. Die Ausgangsanzeige entspricht daher einem sogenannten Home-Screen. Der Home-Screen wird immer dann angezeigt, wenn das Fahrzeug 6 und somit die Anzeigevorrichtung 2 gestartet wird.

Es wird zunächst erfasst, dass das Fahrzeug 6 gestartet wurde. Die Widget-Objekte 7.1 bis 7.3 werden dann auf der Anzeigefläche 3 mit dem ersten Anzeigeinhalt angezeigt. Dabei kann der erste Anzeigeinhalt des Widget-Objekts 7.1 eine geographische Karte sein, welche die Umgebung des Fahrzeugs 6 anzeigt. Der erste Anzeigeinhalt des Widget-Objekts 7.2 kann dabei der zuletzt abgespielte Musiktitel sein. Der erste Anzeigeinhalt des Widget-Objekts 7.3 umfasst die Anzeige der momentanen Wetterlage.

Der Nutzer möchte beispielsweise den momentan abgespielten Musiktitel detaillierter anzeigen oder ändern. Dazu führt der Nutzer eine Bedienaktion aus. Die Bedienaktion besteht dabei daraus, dass der Nutzer die berührungsempfindliche Oberfläche mit einer Fingerspitze 9 seiner Hand 8 an einer Stelle berührt, an der sich das Widget-Objekt 7.2 auf der Anzeigefläche 3 befindet.

Die berührungsempfindliche Oberfläche ermittelt daraufhin, dass die erfasste Bedienaktion eine der Bedienaktionen ist, die bei dem Widget-Objekt 7.2 eine Veränderung des ersten Anzeigeinhalts hervorrufen soll. Weiterhin wird ermittelt, um welche der drei Bedienaktionen es sich handelt.

Nachdem erkannt wurde, dass die Bedienaktion die Berührung des Widget-Objekts 7.2 an einer Stelle ist, wird die Anzeigefläche 3 derart angesteuert, dass das Widget-Objekt 7.2 einen erweiterten Anzeigeinhalt anzeigt. Weiterhin wechselt das Widget-Objekt 7.2 in einen Vollbildmodus, wobei die Widget-Objekte 7.1 und 7.3 nicht mehr auf der Anzeigefläche 3 angezeigt werden. Dadurch werden dem Nutzer die erweiterten Informationen, die auf der ursprünglichen Fläche A des Widget-Objekts nur dargestellt werden können, wenn der erste Anzeigeinhalt verkleinert wird, übersichtlich und in einer Größe, die der Nutzer schnell und einfach wahrnehmen kann, angezeigt. Dies ist in Figur 3b dargestellt.

Der erweiterte Anzeigeinhalt umfasst dabei insbesondere eine Leiste 14 mit Schaltflächen 14.1 bis 14.6, über welche die Fahrzeugfunktion 13.2 bedient werden kann. So kann der Musiktitel durch eine Berührung der Schaltfläche 14.2, 14.3 oder 14.5 verändert werden. Die Musikwiedergabe kann mit der Schaltfläche 14.4 unterbrochen und wieder gestartet werden.

Führt der Nutzer eine Wischgeste auf dem Widget-Objekt 7.2 aus, welche er mit einer Berührung des Widget-Objekts 7.1 mit einer Fingerspitze 9 an einem Berührungspunkt 12.1 beginnt, wird ebenso ermittelt, ob es sich bei der Bedienaktion um eine der drei Bedienaktionen handelt.

Es wird also im vorliegenden Beispiel ermittelt, dass es sich bei der Wischgeste um eine der drei Bedienaktionen handelt. Da eine Wischgeste erfasst wird, wird weiterhin die Richtung 10, in welche die Wischgeste ausgeführt wird, ermittelt. Es wird eine nach links ausgeführte Wischgeste erkannt.

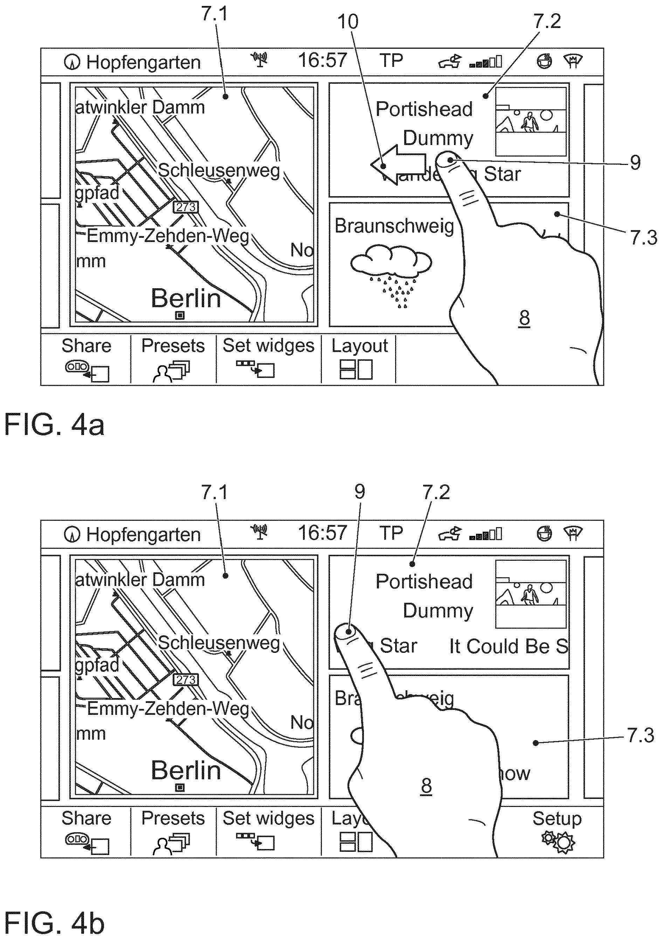

Der erste Anzeigeinhalt entspricht einem Listeneintrag in einer Liste, also beispielsweise einem Musiktitel aus einer Liste von mehreren Musiktiteln. Durch die nach links ausgeführte Wischgeste wird ein Bildlauf erzeugt, mittels welchem die weiteren Listeneinträge in der Liste mit Musiktiteln in Abhängigkeit von der Dauer und der Länge der Wischgeste nach und nach in dem Widget-Objekt 7.2 zur Anzeige gebracht werden. Da die Richtung der Wischgeste als links ermittelt wurde, werden die Listeneinträge zur Anzeige gebracht, die in der Liste nach dem in dem ersten Anzeigeinhalt angezeigten Listeneintrag angeordnet sind. Die Größe des Widget-Objekts 7.2 wird dabei nicht verändert. Bei einer Wischgeste nach rechts werden nacheinander in dem Widget-Objekt 7.2 die Listeneinträge zur Anzeige gebracht, die in der Liste vor dem im ersten Anzeigeinhalt angezeigten Listeneintrag angeordnet sind. Es wird also bei einer Wischgeste nach rechts oder links ein horizontaler Bildlauf erzeugt, wie in den Figuren 4a und 4b dargestellt.

Wird die Wischgeste über das Widget-Objekt hinausgeführt, also nicht mehr im Bereich des Widget-Objekts 7.2, wird der Bildlauf beendet. Ein Bildlauf wird nur erzeugt, solange sich der Nutzer mit dem Betätigungselement innerhalb der Fläche A des Widget-Objekts 7.2 befindet.

Alternativ kann der Nutzer das Widget-Objekt 7.2 durch Antippen auswählen, wobei das ausgewählte Widget-Objekt 7.2 dann hervorgehoben dargestellt wird. Die Wischgeste kann dann an einer beliebigen Stelle auf der berührungsempfindlichen Oberfläche ausgeführt werden. Tippt der Nutzer nochmal auf das Widget-Objekt 7.2, wird die Auswahl aufgehoben und ausgeführte Wischgesten beziehen sich nicht mehr auf das Widget-Objekt 7.2.

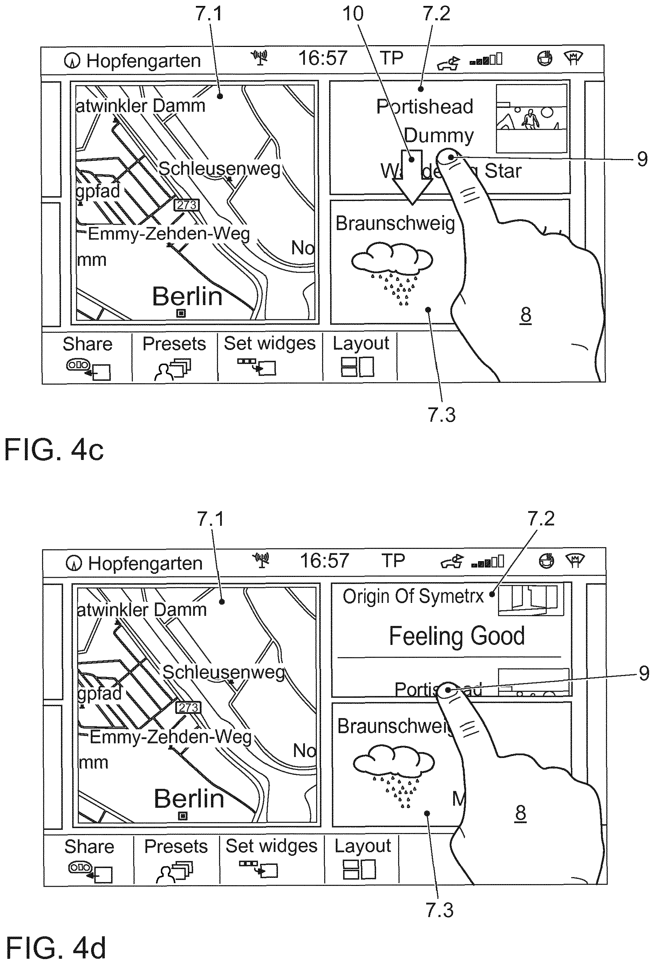

Wird die Richtung 10 der Wischgeste als nach oben oder unten gerichtet erfasst, wird ein vertikaler Bildlauf durch die Liste erzeugt. Dies ist in den Figuren 4c und 4d gezeigt.

Beabsichtigt der Nutzer, Einstellungen des Widget-Objekts 7.2 zu ändern, führt eine Bedienaktion aus, bei der er das Widget-Objekt 7.2 an zwei Berührungspunkten 12.1 und 12.2 mit den Fingerspitzen seiner Zeige- 9.1 und seines Mittelfingers 9.2 seiner linken Hand 8 berührt. Die Bedienaktion ist wieder eine Wischgeste.

Unter Einstellungen des Widget-Objekts 7.2 werden insbesondere Einstellungen zur Darstellungsart des Widget-Objekts 7.2 und zur angezeigten Information für den ersten und den zweiten Anzeigeinhalt des Widget-Objekts 7.2 verstanden.

Es wird wieder ermittelt, dass es sich bei der Bedienaktion mit der Berührung des Widget-Objekts an zwei Berührungspunkten 12.1 und 12.2 um eine der drei Bedienaktionen handelt. Weiterhin wird erkannt, dass die Bedienaktion eine Wischgeste ist, und es wird die Richtung 10 der Wischgeste als nach unten gerichtet ermittelt.

Die Anzeigefläche 3 wird so angesteuert, dass das Widget-Objekt 7.2 um die Achse 11 geschwenkt wird. Der Schwenkwinkel des Widget-Objekts 7.2 wird dabei umso größer, je weiter nach unten der Nutzer seine Fingerspitzen 9.1 und 9.2 in dem Widget-Objekt 7.2 bewegt. Erreicht der Nutzer mit seinen Fingerspitzen 9.1 und 9.2 eine Begrenzung 16 der Fläche A, die das Widget-Objekt 7.2 in nicht geschwenkter Form einnimmt, ist der Schwenkwinkel maximal. Das Widget-Objekt 7.2 wird in einer Animation umgedreht. Dabei wird das Widget-Objekt 7.2 bei der Schwenkung insbesondere perspektivisch oder in einer dreidimensionalen Ansicht dargestellt.

Es wird dann eine virtuelle Rückseite 17 des Widget-Objekts 7.2 angezeigt.

Die virtuelle Rückseite 17 des Widget-Objekts 7.2 kann dabei in umgedrehter Form die gleiche Fläche A einnehmen, wie das nicht umgedrehte Widget-Objekt 7.2.

Auf der virtuellen Rückseite 17 werden Schaltflächen 18.1 bis 18.6 angezeigt, über welche die Einstellungen für das Widget-Objekt 7.2 dann verändert werden können.

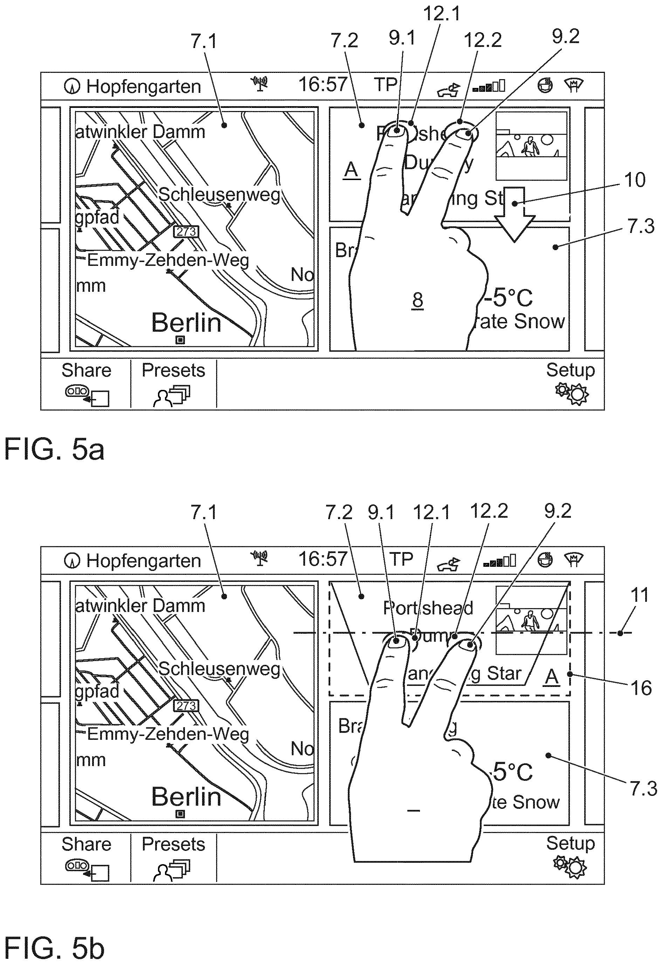

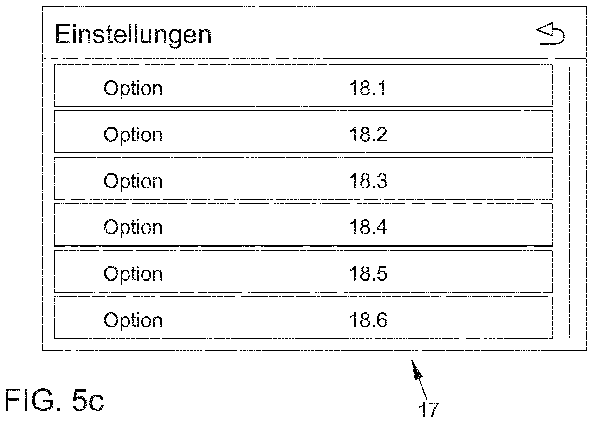

Erfindungsgemäß wird die virtuelle Rückseite 17 in einem Vollbildmodus angezeigt, um dem Nutzer die Einstellung des Widget-Objekts 7.2 über die Schaltflächen 18.1 bis 18.6 zu erleichtern. Die virtuelle Rückseite 17 ist in Figur 5c gezeigt.

Es ist natürlich auch möglich, dass der Bildlauf durch eine Berührung der berührungsempfindlichen Oberfläche mit zwei Fingern und das Umdrehen des Widget-Objekts 7.2 mit einer Berührung der berührungsempfindlichen Oberfläche mit zwei Fingern hervorgerufen wird.

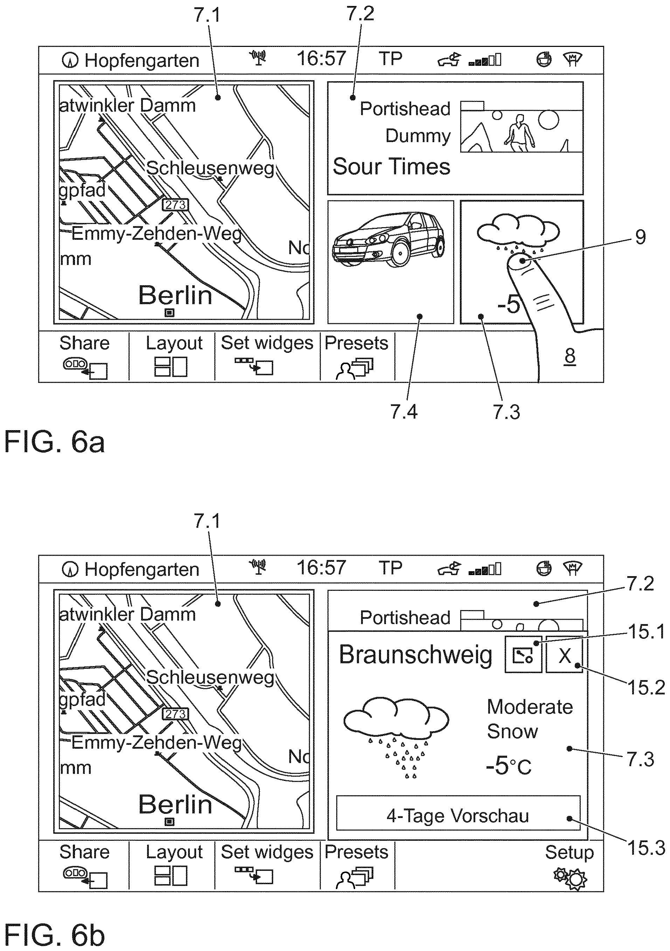

Mit Bezug zu den Figuren 6a und 6b wird ein weiteres Ausführungsbeispiel des Verfahrens dieser Offenbarung erläutert. Dabei wird die Fahrzeugfunktion 13.3, welche über das Widget-Objekt 7.3 bedient wird, bedient.

Auf dem Home-Screen wird beispielsweise das weitere Widget-Objekt 7.4 neben dem Widget-Objekt 7.3 angezeigt.

Es wird eine Berührung der berührungsempfindlichen Oberfläche an der Stelle des Widget-Objekts 7.3 auf der Anzeigefläche 3 beispielsweise durch die Fingerspitze 9 des Nutzers erfasst. Das Widget-Objekt 7.3 umfasst dabei denselben ersten Anzeigeinhalt wie im vorherigen ersten Ausführungsbeispiel.

Das Widget-Objekt 7.3 wird vergrößert dargestellt. Dabei wird das Widget-Objekt 7.4 ganzheitlich und das Widget-Objekt 7.2 teilweise überdeckt. Das Widget-Objekt 7.1 wird unverändert in ursprünglicher Größe angezeigt.

Das Widget-Objekt 7.3 umfasst in seiner vergrößerten Form einen erweiterten Anzeigeinhalt, der Schaltflächen 15.1 bis 15.3 umfasst, über welche die Fahrzeugfunktion 13.3 zugänglich und bedienbar ist. Die Informationsanzeige zu den Wetterdaten kann dann über das Widget-Objekt im erweiterten Anzeigezustand an die Bedürfnisse des Nutzers angepasst werden.

In dieser Ausführungsform wird zwar das Widget-Objekt 7.3 vergrößert dargestellt und dadurch die Bedienung erleichtert, es wird allerdings kein Vollbildmodus erzeugt. Der Nutzer kann nach wie vor das Navigationssystem weiter verwenden und der Routenführung weiterhin folgen.

Es wird darauf hingewiesen, dass jeder Fahrzeuginsasse innerhalb des Fahrzeugs 6 das Verfahren ausführen kann. Insbesondere können auch jedem der Widget-Objekte 7.1 bis 7.3 oder 7.1 bis 7.4 andere Bedienaktionen zugeordnet sein. Wird jedoch auf einem der Widget-Objekte 7.1 bis 7.4 eine Bedienaktion ausgeführt, die diesem nicht zugeordnet ist, wird die Bedienaktion ignoriert.

### Bezugszeichenliste

- 1: Vorrichtung
- 2: Anzeigevorrichtung
- 3: Anzeigefläche
- 4: Erfassungseinheit
- 5: Steuereinheit
- 6: Fahrzeug
- 7.1 - 7-4: Widget-Objekte
- 8: Hand des Nutzers
- 9: Betätigungselement; Fingerspitze
- 10: Richtung der Wischgeste
- 11: Schwenkachse
- 12.1, 12.2: Berührungspunkte
- 13.1 - 13.4: Fahrzeugfunktionen
- 14: Leiste mit Schaltflächen
- 14.1 - 14.5: Schaltflächen
- 15.1 - 15.3: Schaltflächen
- 16: Begrenzung der Fläche A
- 17: virtuelle Rückseite
- 18.1 - 18.6: Schaltflächen
- A: ursprüngliche Fläche des Widget-Objekts

## Patentansprüche

1. Verfahren zum Bereitstellen einer graphischen Benutzerschnittstelle in einem Fahrzeug (6), wobei das Fahrzeug (6) zumindest zwei Fahrzeugfunktionen (13.1 - 13.4) umfasst, bei dem
zumindest ein erstes (7.2, 7.3) und ein zweites Widget-Objekt (7.1, 7.4) auf einer Anzeigefläche (3) mit jeweils einem ersten Anzeigeinhalt angezeigt werden, wobei das erste (7.2, 7.3) und das zweite Widget-Objekt (7.1, 7.4) jeweils einer Fahrzeugfunktion (13.1 - 13.4) zugeordnet sind und zumindest dem ersten Widget-Objekt (7.2, 7.3) mehrere Bedienaktionen zugeordnet sind,
eine Bedienaktion für das erste Widget-Objekt (7.2, 7.3) erfasst wird,
ermittelt wird, um welche der mehreren Bedienaktionen es sich bei der erfassten Bedienaktion handelt, und
der erste Anzeigeinhalt des ersten Widget-Objekts (7.2, 7.3) in Abhängigkeit von der erfassten Bedienaktion auf einen zweiten Anzeigeinhalt verändert wird, wobei
die mehreren dem ersten Widget-Objekt (7.2, 7.3) zugeordneten Bedienaktionen eine Berührung des ersten Widget-Objekts (7.2, 7.3) an einem Berührungspunkt (9.1), eine Berührung des ersten Widget-Objekts (7.2, 7.3) an zumindest zwei Berührungspunkten (9.1, 9.2) und/oder eine Wischgeste mit anfänglich einem (9.1) oder zwei Berührungspunkten (9.1, 9.2) innerhalb der Fläche (A) des ersten Widget-Objekts (7.2, 7.3) umfassen,
**dadurch gekennzeichnet, dass**,
wenn die Bedienaktion als die Wischgeste mit anfänglich zwei Berührungspunkten (9.1, 9.2) ermittelt wird, die Richtung (10) der Wischgeste ermittelt wird,
das erste Widget-Objekt (7.2, 7.3) durch die Bedienaktion um eine Achse (11) geschwenkt angezeigt wird, wobei die Schwenkrichtung des ersten Widget-Objekts (7.2, 7.3) abhängig von der Richtung (10) der Wischgeste ist,
das erste Widget-Objekt (7.2, 7.3) eine virtuelle Rückseite (17) aufweist und das erste Widget-Objekt (7.2, 7.3) solange um die Achse (11) geschwenkt wird, bis das Widget-Objekt (7.2, 7.3) umgedreht angezeigt wird, so dass die virtuelle Rückseite (17) angezeigt wird, wobei auf der virtuellen Rückseite (17) Einstellungsmöglichkeiten für das erste Widget-Objekt (7.2, 7.3) angezeigt werden, und,
wenn das Widget-Objekt (7.2, 7.3) umgedreht wurde, die virtuelle Rückseite (17) in einem Vollbildmodus angezeigt wird.

2. Verfahren nach Anspruch 1,
**dadurch gekennzeichnet, dass**
der zweite Anzeigeinhalt zumindest eine bedienbare Schaltfläche (14.1 - 14.5, 15.1 - 15.3, 18.1 - 18.6) umfasst, mittels welcher die dem ersten Widget-Objekt (7.2, 7.3) zugeordnete Fahrzeugfunktion (13.2, 13.3) bedient wird.

3. Verfahren nach Anspruch 1 oder 2,
**dadurch gekennzeichnet, dass**
erfasst wird, ob das Fahrzeug (6) gestartet wird, und
wenn erfasst worden ist, dass das Fahrzeug (6) gestartet wurde, das erste (7.2, 7.3) und das zweite Widget-Objekt (7.1, 7.4) mit dem ersten Anzeigeinhalt automatisch auf der Anzeigefläche (3) angezeigt werden.

4. Verfahren nach einem der vorhergehenden Ansprüche,
**dadurch gekennzeichnet, dass**
das erste Widget-Objekt (7.2, 7.3) während des Schwenkens perspektivisch oder dreidimensional dargestellt wird.

5. Vorrichtung (1) zum Bereitstellen einer graphischen Benutzerschnittstelle in einem Fahrzeug (6), wobei das Fahrzeug (6) zumindest zwei Fahrzeugfunktionen (13.1 - 13.4) aufweist, mit
einer Anzeigefläche (3), auf welcher zumindest ein erstes (7.2, 7.3) und ein zweites Widget-Objekt (7.1, 7.4) mit einem ersten Anzeigeinhalt anzeigbar sind, wobei das erste (7.2, 7.3) und das zweite Widget-Objekt (7.1, 7.4) jeweils einer Fahrzeugfunktion (13.1 - 13.4) zugeordnet sind und zumindest dem ersten Widget-Objekt (7.2, 7.3) mehrere Bedienaktionen zugeordnet sind,
einer Erfassungseinheit (4), mittels welcher eine Bedienaktion für das erste Widget-Objekt (7.2, 7.3) erfassbar ist und mittels welcher ermittelbar ist, um welche der mehreren Bedienaktionen es sich bei der ermittelten Bedienaktion handelt, und
einer Steuereinheit (5), mittels welcher die Anzeigefläche (3) derart ansteuerbar ist, dass der erste Anzeigeinhalt in dem ersten Widget-Objekt (7.2, 7.3) in Abhängigkeit von der erfassten Bedienaktion auf einen zweiten Anzeigeinhalt veränderbar ist, wobei
die mehreren dem ersten Widget-Objekt (7.2, 7.3) zugeordneten Bedienaktionen eine Berührung des ersten Widget-Objekts (7.2, 7.3) an einem Berührungspunkt (9.1), eine Berührung des ersten Widget-Objekts (7.2, 7.3) an zumindest zwei Berührungspunkten (9.1, 9.2) und/oder eine Wischgeste mit anfänglich einem (9.1) oder zwei Berührungspunkten (9.1, 9.2) innerhalb der Fläche (A) des ersten Widget-Objekts (7.2, 7.3) umfassen,
**dadurch gekennzeichnet, dass**,
wenn die Bedienaktion als die Wischgeste mit anfänglich zwei Berührungspunkten (9.1, 9.2) ermittelt wird, die Richtung (10) der Wischgeste ermittelbar ist,
das erste Widget-Objekt (7.2, 7.3) durch die Bedienaktion um eine Achse (11) geschwenkt anzeigbar ist, wobei die Schwenkrichtung des ersten Widget-Objekts (7.2, 7.3) abhängig von der Richtung (10) der Wischgeste ist,
das erste Widget-Objekt (7.2, 7.3) eine virtuelle Rückseite (17) aufweist und das erste Widget-Objekt (7.2, 7.3) solange um die Achse (11) schwenkbar ist, bis das Widget-Objekt (7.2, 7.3) umgedreht angezeigt wird, so dass die virtuelle Rückseite (17) angezeigt wird, wobei auf der virtuellen Rückseite (17) Einstellungsmöglichkeiten für das erste Widget-Objekt (7.2, 7.3) anzeigbar sind, und,
wenn das Widget-Objekt (7.2, 7.3) umgedreht wurde, die virtuelle Rückseite (17) in einem Vollbildmodus anzeigbar ist.

6. Vorrichtung (1) nach Anspruch 5,
**dadurch gekennzeichnet, dass**
mittels der Erfassungseinheit (4) Wischgesten erfassbar sind, wobei Richtungen (10) der Wischgesten ermittelbar sind und der erste Anzeigeinhalt des ersten Widget-Objekts (7.2, 7.3) in Abhängigkeit von den ermittelten Richtungen (10) der Wischgesten veränderbar ist.

7. Vorrichtung (1) nach Anspruch 5 oder 6,
**dadurch gekennzeichnet, dass**
die Erfassungseinheit (4) eine auf der Anzeigefläche (3) angeordnete berührungsempfindliche Oberfläche umfasst.

8. Vorrichtung (1) nach Anspruch 5, 6 oder 7
**dadurch gekennzeichnet, dass**
die Fahrzeugfunktionen eine Navigationsfunktion (13.1), eine Multimediafunktion (13.2), eine Kommunikationsfunktion (13.3) und/oder eine Fahrzeugüberwachungsfunktion (13.4) umfassen.

9. Fahrzeug (6) mit einer Vorrichtung (1) nach einem der Ansprüche 5 bis 8.

## Claims

1. Method for providing a graphical user interface in a vehicle (6), wherein the vehicle (6) comprises at least two vehicle functions (13.1-13.4), in which
at least a first (7.2, 7.3) and a second (7.1, 7.4) widget object are displayed on a display panel (3) with a respective first display content, wherein the first (7.2, 7.3) and the second (7.1, 7.4) widget object are associated with a respective vehicle function (13.1-13.4) and at least the first widget object (7.2, 7.3) has multiple associated operator control actions,
an operator control action is detected for the first widget object (7.2, 7.3),
it is ascertained which of the multiple operator control actions the detected operator control action is, and
the first display content of the first widget object (7.2, 7.3) is altered on the basis of the detected operator control action to produce a second display content, wherein
the multiple operator control actions associated with the first widget object (7.2, 7.3) comprise a touch of the first widget object (7.2, 7.3) at a contact point (9.1), a touch of the first widget object (7.2, 7.3) at at least two contact points (9.1, 9.2) and/or a swipe gesture with initially one (9.1) or two (9.1, 9.2) contact points within the area (A) of the first widget object (7.2, 7.3),
**characterized in that**
if the operator control action is ascertained as the swipe gesture with initially two contact points (9.1, 9.2), the direction (10) of the swipe gesture is ascertained,
the first widget object (7.2, 7.3) is displayed in a manner swivelled about an axis (11) by the operator control action, wherein the swivel direction of the first widget object (7.2, 7.3) is dependent on the direction (10) of the swipe gesture,
the first widget object (7.2, 7.3) has a virtual rear (17) and the first widget object (7.2, 7.3) is swivelled about the axis (11) until the widget object (7.2, 7.3) is displayed in reversed fashion, so that the virtual rear (17) is displayed, wherein settings options for the first widget object (7.2, 7.3) are displayed on the virtual rear (17), and,
if the widget object (7.2, 7.3) has been reversed, the virtual rear (17) is displayed in a full-screen mode.

2. Method according to Claim 1,
**characterized in that**
the second display content comprises at least one operable button (14.1-14.5, 15.1-15.3, 18.1-18.6) by means of which the vehicle function (13.2, 13.3) associated with the first widget object (7.2, 7.3) is controlled.

3. Method according to Claim 1 or 2, **characterized in that**
it is detected whether the vehicle (6) is started, and
if it has been detected that the vehicle (6) has been started, the first (7.2, 7.3) and the second (7.1, 7.4) widget object are automatically displayed on the display panel (3) with the first display content.

4. Method according to one of the preceding claims,
**characterized in that**
the first widget object (7.2, 7.3) is depicted in a perspective or three-dimensional manner during swivelling.

5. Apparatus (1) for providing a graphical user interface in a vehicle (6), wherein the vehicle (6) has at least two vehicle functions (13.1-13.4), having
a display panel (3) on which at least a first (7.2, 7.3) and a second (7.1, 7.4) widget object are displayable with a first display content, wherein the first (7.2, 7.3) and the second (7.1, 7.4) widget object are associated with a respective vehicle function (13.1-13.4) and at least the first widget object (7.2, 7.3) has multiple associated operator control actions,
a detection unit (4) by means of which an operator control action for the first widget object (7.2, 7.3) is detectable and by means of which it is ascertainable which of the multiple operator control actions the ascertained control action is, and
a control unit (5) by means of which the display panel (3) is actuatable such that the first display content in the first widget object (7.2, 7.3) is alterable on the basis of the detected operator control action to produce a second display content, wherein
the multiple operator control actions associated with the first widget object (7.2, 7.3) comprise a touch of the first widget object (7.2, 7.3) at a content point (9.1), a touch of the first widget object (7.2, 7.3) at at least two contact points (9.1, 9.2) and/or a swipe gesture with initially one (9.1) or two (9.1, 9.2) contact points within the area (A) of the first widget object (7.2, 7.3),
**characterized in that**
if the operator control action is ascertained as the swipe gesture with initially two contact points (9.1, 9.2), the direction (10) of the swipe gesture is ascertainable,
the first widget object (7.2, 7.3) is displayable in a manner swivelled about an axis (11) via the operator control action, wherein the swivel direction of the first widget object (7.2, 7.3) is dependent on the direction (10) of the swipe gesture,
the first widget object (7.2, 7.3) has a virtual rear (17) and the first widget object (7.2, 7.3) is swivellable about the axis (11) until the widget object (7.2, 7.3) is displayed in a reversed manner, so that the virtual rear (17) is displayed, wherein settings options for the first widget object (7.2, 7.3) are displayable on the virtual rear (17), and,
if the widget object (7.2, 7.3) has been reversed, the virtual rear (17) is displayable in a full-screen mode.

6. Apparatus (1) according to Claim 5,
**characterized in that**
the swipe gestures are detectable by means of the detection unit (4), wherein directions (10) of the swipe gestures are ascertainable and the first display content of the first widget object (7.2, 7.3) is alterable on the basis of the ascertained directions (10) of the swipe gestures.

7. Apparatus (1) according to Claim 5 or 6,
**characterized in that**
the detection unit (4) comprises a touch-sensitive surface arranged on the display panel (3).

8. Apparatus (1) according to Claim 5, 6 or 7,
**characterized in that**
the vehicle functions comprise a navigation function (13.1), a multimedia function (13.2), a communication function (13.3) and/or a vehicle monitoring function (13.4).

9. Vehicle (6) having an apparatus (1) according to one of Claims 5 to 8.

## Revendications

1. Procédé de fourniture d'une interface utilisateur graphique dans un véhicule (6), le véhicule (6) comprenant au moins deux fonctions de véhicule (13.1 - 13.4), selon lequel
au moins un premier (7.2, 7.3) et un deuxième objet Widget (7.1, 7.4) sont affichés sur une surface d'affichage (3) avec respectivement un premier contenu d'affichage, le premier (7.2, 7.3) et le deuxième objet Widget (7.1, 7.4) étant respectivement associés à une fonction de véhicule (13.1 - 13.4) et plusieurs actions de service étant associées au moins au premier objet Widget (7.2, 7.3), une action de service pour le premier objet Widget (7.2, 7.3) est détectée,
il est déterminé quelle action de service est détectée parmi les plusieurs actions de service, et
le premier contenu d'affichage du premier objet Widget (7.2, 7.3) est modifié en un deuxième contenu d'affichage en fonction de l'action de service détectée,
les plusieurs actions de service associées au premier objet Widget (7.2, 7.3) comprenant un contact du premier objet Widget (7.2, 7.3) au niveau d'un point de contact (9.1), un contact du premier objet Widget (7.2, 7.3) en au moins deux points de contact (9.1, 9.2) et/ou un geste de balayage commençant au niveau d'un (9.1) ou de deux points de contact (9.1, 9.2) à l'intérieur de la surface (A) du premier objet Widget (7.2, 7.3),
**caractérisé en ce que**
lorsque l'action de service déterminée est le geste de balayage commençant au niveau de deux points de contact (9.1, 9.2), la direction (10) du geste de balayage est déterminée,
le premier objet Widget (7.2, 7.3) est affiché pivoté autour d'un axe (11) sous l'effet de l'action de service, la direction de pivotement du premier objet Widget (7.2, 7.3) étant dépendante de la direction (10) du geste de balayage,
le premier objet Widget (7.2, 7.3) présente un côté arrière virtuel (17) et le premier objet Widget (7.2, 7.3) est pivoté autour de l'axe (11) jusqu'à ce que l'objet Widget (7.2, 7.3) soit représenté retourné, de sorte que le côté arrière virtuel (17) soit affiché, des possibilités de réglage du premier objet Widget (7.2, 7.3) étant affichées sur le côté arrière virtuel (17), et
lorsque l'objet Widget (7.2, 7.3) a été retourné, le côté arrière virtuel (17) est affiché dans un mode plein écran.

2. Procédé selon la revendication 1, **caractérisé en ce que** le deuxième contenu d'affichage comprend un contrôle utilisable (14.1 - 14.5, 15.1 - 15.3, 18.1 - 18.6) au moyen duquel est utilisée la fonction de véhicule (13.2, 13.3) associée au premier objet Widget (7.2, 7.3).

3. Procédé selon la revendication 1 ou 2, **caractérisé en ce que** le démarrage éventuel du véhicule (6) est détecté et si le démarrage du véhicule (6) a été détecté, le premier (7.2, 7.3) et le deuxième objet Widget (7.1, 7.4) sont affichés automatiquement sur la surface d'affichage (3) avec le premier contenu d'affichage.

4. Procédé selon l'une des revendications précédentes, **caractérisé en ce que** le premier objet Widget (7.2, 7.3) est représenté en perspective ou en trois dimensions pendant le pivotement.

5. Dispositif (1) pour fournir une interface utilisateur graphique dans un véhicule (6), le véhicule (6) possédant au moins deux fonctions de véhicule (13.1 - 13.4), comprenant
une surface d'affichage (3) sur laquelle peuvent être affichés au moins un premier (7.2, 7.3) et un deuxième objet Widget (7.1, 7.4) avec un premier contenu d'affichage, le premier (7.2, 7.3) et le deuxième objet Widget (7.1, 7.4) étant respectivement associés à une fonction de véhicule (13.1 - 13.4) et plusieurs actions de service étant associées au moins au premier objet Widget (7.2, 7.3),
une unité de détection (4) au moyen de laquelle peut être détectée une action de service pour le premier objet Widget (7.2, 7.3) et au moyen de laquelle il peut être déterminé quelle action de service est détectée parmi les plusieurs actions de service, et
une unité de commande (5) au moyen de laquelle la surface d'affichage (3) peut être commandée de telle sorte que le premier contenu d'affichage dans le premier objet Widget (7.2, 7.3) peut être modifié en un deuxième contenu d'affichage en fonction de l'action de service détectée,
les plusieurs actions de service associées au premier objet Widget (7.2, 7.3) comprenant un contact du premier objet Widget (7.2, 7.3) au niveau d'un point de contact (9.1), un contact du premier objet Widget (7.2, 7.3) en au moins deux points de contact (9.1, 9.2) et/ou un geste de balayage commençant au niveau d'un (9.1) ou de deux points de contact (9.1, 9.2) à l'intérieur de la surface (A) du premier objet Widget (7.2, 7.3),
**caractérisé en ce que**
lorsque l'action de service déterminée est le geste de balayage commençant au niveau de deux points de contact (9.1, 9.2), la direction (10) du geste de balayage peut être déterminée,
le premier objet Widget (7.2, 7.3) peut être affiché pivoté autour d'un axe (11) sous l'effet de l'action de service, la direction de pivotement du premier objet Widget (7.2, 7.3) étant dépendante de la direction (10) du geste de balayage,
le premier objet Widget (7.2, 7.3) présente un côté arrière virtuel (17) et le premier objet Widget (7.2, 7.3) peut pivoter autour de l'axe (11) jusqu'à ce que l'objet Widget (7.2, 7.3) soit représenté retourné, de sorte que le côté arrière virtuel (17) soit affiché, des possibilités de réglage du premier objet Widget (7.2, 7.3) pouvant être affichées sur le côté arrière virtuel (17), et
lorsque l'objet Widget (7.2, 7.3) a été retourné, le côté arrière virtuel (17) peut être affiché dans un mode plein écran.

6. Dispositif (1) selon la revendication 5, **caractérisé en ce que** des gestes de balayage peuvent être détectés au moyen de l'unité de détection (4), les directions (10) des gestes de balayage pouvant être déterminées et le premier contenu d'affichage du premier objet Widget (7.2, 7.3) pouvant être modifié en fonction des directions (10) déterminées des gestes de balayage.

7. Dispositif (1) selon la revendication 5 ou 6, **caractérisé en ce que** l'unité de détection (4) comprend une surface tactile disposée sur la surface d'affichage (3) .

8. Dispositif (1) selon la revendication 5, 6 ou 7, **caractérisé en ce que** les fonctions de véhicule comprennent une fonction de navigation (13.1), une fonction multimédia (13.2), une fonction de communication (13.3) et/ou une fonction de surveillance du véhicule (13.4).

9. Véhicule (6) équipé d'un dispositif (1) selon l'une des revendications 5 à 8.
